# EUROPÄISCHE PATENTSCHRIFT

(11) **EP 2 196 694 B1**
(45) Veröffentlichungstag und Bekanntmachung des Hinweises auf die Patenterteilung: **05.10.2011**
(21) Anmeldenummer: 10002925.5
(22) Anmeldetag: 26.07.2007
(51) Int. Cl.: F16D 55/227, F16D 55/46

(54) **Scheibenbremse mit Führungsplatte**
Electromechancally actuated disc brake with guide plate
Frein à disque actionné de façon électromécanique et doté d'une plaque de guidage

(30) Priorität: 03.08.2006 DE 102006036278
(43) Veröffentlichungstag der Anmeldung: 16.06.2010
(62) Teilanmeldung aus: 07786361.1
(73) Patentinhaber: Knorr-Bremse Systeme für Nutzfahrzeuge GmbH, 80809 München (DE)
(72) Erfinder: Baumgartner, Johann, 85368 Moosburg (DE); Gruber, Robert, 83539 Pfaffing (DE); Trimpe, Robert, 82234 Wessling (DE)
(74) Vertreter: Mattusch, Gundula

(56) Entgegenhaltungen:
- WO-A-03/071150
- WO-A-2006/042726
- DE-A1-102005 030 618

## Beschreibung

Die Erfindung betrifft eine Scheibenbremse in selbstverstärkender Bauart nach dem Oberbegriff des Anspruchs 1.

Scheibenbremsen, welche den Leistungsbedarf des Antriebs durch die Nutzung von Selbstverstärkungseffekten reduzieren, sind seit Jahrzehnten bekannt.

Typische Beispiele derartiger Bremsen sind z.B. in der DE 101 56 348 C1, in der eigenen älteren, gattungsgemäßen Patentanmeldung DE 101 39 913.8 und in der DE 10 2005 030 618.7 beschrieben.

Bremsen dieser Bauart ist gemeinsam, dass die Abstützung der auf den Bremsbelag wirkenden Umfangskräfte über ein Keil- oder ein Rampensystem erfolgt, welches die Selbstverstärkung bewirkt.

Dabei wird die auf den Bremsbelag wirkende Reibkraft von einem mit dem Bremsbelag verbundenen und mit diesem in Umfangsrichtung verschieblichen Teil der Selbstverstärkungs-Einrichtung über Rollkörper oder mittels Gleitkontakt auf einen in Umfangsrichtung stationären Teil der Selbstverstärkungseinrichtung übertragen.

Bei Bremsen, die nicht mit einer Verschleiß-Nachstelleinrichtung ausgestattet sind, erfolgt die Kraftübertragung direkt vom stationären Teil auf den Bremssattel.

Wenn jedoch, wie bei Scheibenbremsen für Nutzfahrzeug -Anwendungen üblich, eine Verschleiss-Nachstelleinrichtung verwendet wird, ist es vorteilhaft, wenn ein bei Bremsungen stationärer Teil der Selbstverstärkungseinrichtung mit längenveränderlichen Kolben dieser Nachstelleinrichtung verbunden ist, die mit einem Führungssystem versehen sind, über welches Umfangskräfte auf den Bremssattel abgeleitet werden.

Durch die Übertragung der hohen Umfangskräfte, welche bei einer Scheibenbremse für schwere Nutzfahrzeuge mehr als 80 kN betragen können, ergibt sich an den empfindlichen Bauteilen der Nachstellvorrichtung Verschleiß und es wird eine für den eigentlichen Zweck übermäßig große Dimensionierung dieser Bauteile erforderlich.

Im Falle einer Ausführung der Bremse als Schiebesattelbremse tritt das beschriebene Problem mehrfach auf, weil die Umfangskräfte in diesem Fall zusätzlich noch vom Bremssattel über dessen Schiebeführung auf den achsfesten Bremsträger übertragen werden müssen.

In Fig. 3 der WO 03/071150 A 1 wird eine Bremsenbauart beschrieben bei welcher die Umfangskraftabstützung des stationären Teils der Selbstverstärkungseinrichtung direkt auf den Bremsrahmen erfolgt. Das stationäre Bauteil ist sehr massiv ausgeführt, da die Betätigungskraft zwischen diesem Bauteil und der Druckplatte erzeugt wird. Im Falle der Ausführung als Schiebesattelbremse müssen hier die Umfangskräfte über die Schiebeführung des Bremssattels abgeleitet werden.

Die Erfindung hat die Aufgabe, die Scheibenbremse in selbstverstärkender Bauart derart weiter zu entwickeln, das empfindliche Bauteile einer Nachstellvorrichtung und/oder einer Sattelschiebeführung weniger stark belastet werden..

Die Erfindung löst diese Aufgabe durch den Gegenstand des Anspruchs 1.

Vorteilhafte Ausgestaltungen der Erfindung sind den Unteransprüchen zu entnehmen.

Danach ist das stationäre Bauteil der Selbstverstärkungseinrichtung, welches mit der Nachstellvorrichtung verbunden ist, derart mit geringem Spiel parallel zur Bremsscheibendrehachse zwischen Führungsflächen des achsfesten Bauteils der Bremse aufgenommen, dass bei Bremsungen die auftretenden Umfangskräfte unmittelbar von diesem stationären Bauteil der Selbstverstärkungseinrichtung auf das achsfeste Bauteil der Bremse abgestützt werden.

Derart wird eine Scheibenbremse in selbstverstärkender Bauart geschaffen, bei welcher die Übertragung der vom Bremsbelag in die Selbstverstärkungseinrichtung eingeleiteten Umfangskraft auf das achsfeste Bauteil der Bremse derart erfolgt, dass empfindliche Bauteile einer Nachstellvorrichtung und/oder einer Sattelschiebeführung nicht mehr mit diesen Kräften beaufschlagt werden.

Die Lösung wird besonders vorteilhaft bei Schiebesattelbremsen angewendet werden. Das achsfeste Bauteil ist in diesem Fall vorzugsweise der Bremsträger der Schiebesattelbremse. Anders als bei üblichen Schiebsattelscheibenbremsen für Nutzfahrzeugen wird damit nicht mehr der Belag direkt am Bremsträger abgestützt sondern insbesondere eine als oder mehrere als Druckstempel ausgebildete Nachstellvorrichtungen.

Der Schiebesattel selbst, das im Sattel befindliche Verschleißnachstellsystem sowie die Schiebeführung des Sattels sind von den auftretenden Umfangskräften entlastet, da diese Kräfte direkt von der Führungsplatte auf den Bremsträger abgeleitet werden.

Nachfolgend wird die Erfindung anhand eines Ausführungsbeispiel näher beschrieben. Es zeigen:
Fig. 1 eine erste Schnittansicht einer Schiebesattel-Scheibenbremse; und

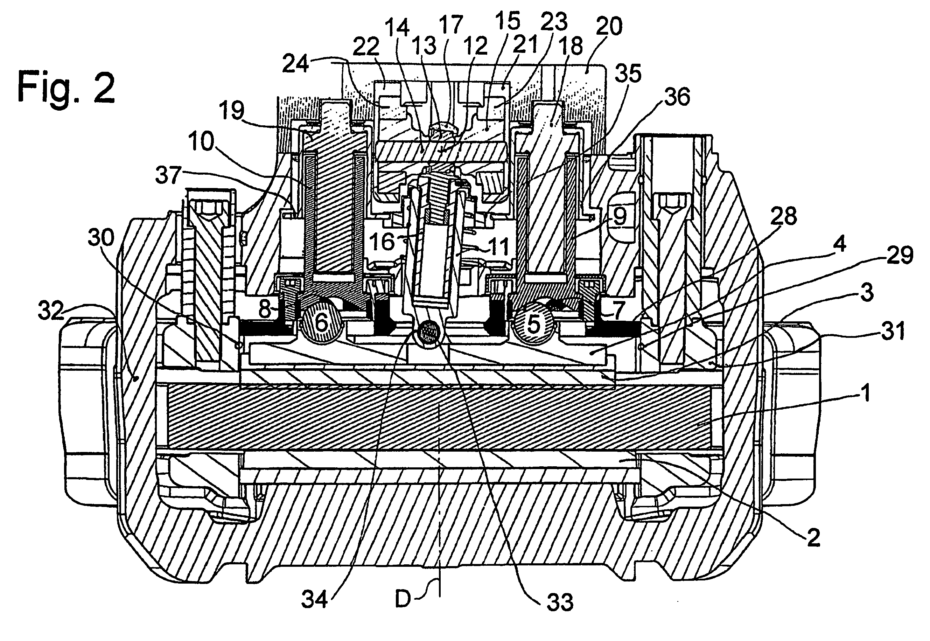

Fig. 2 eine weitere Schnittansicht der Scheibenbremse aus Fig. 1.

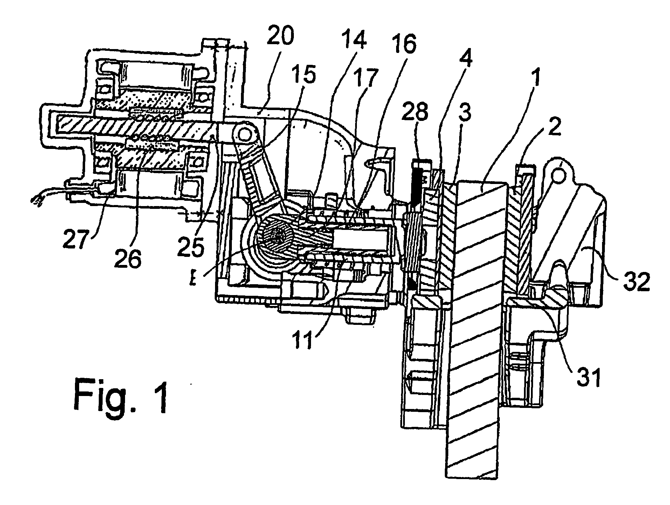

Fig. 1 zeigt eine (Teilbelag-) Schiebesattel-Scheibenbremse, mit beidseits einer Bremsscheibe 1 angeordneten Bremsbelägen 2 und 3.

Die Schiebesattel-Scheibenbremse weist einen die Bremsscheibe 1 im Umfangsrandbereich übergreifenden ein- oder hier mehrteiligen Bremssattel 32 (mit einem Bremssatteldeckel 20) auf, welcher eine Zuspannvorrichtung aufnimmt. Der Bremssattel 32 ist mittels einer Sattelschiebeführung 38/39 an einem achsfesten Bremsträger 31 verschieblich geführt.

Ein Elektromotor 27 am Bremsengehäuse 20 wirkt über einen Gewindetrieb, hier einen Kugelgewindetrieb 26, auf einen vorzugsweise exzentrisch im Bremssattel 20 gelagerten Bremsdrehhebel 15, der infolge einer Betätigung durch den Kugelgewindetrieb um eine senkrecht zur Bremsscheibendrehachse D ausgerichtete Drehachse verschwenkbar ist.

Der Bremsdrehhebel 15 wirkt wiederum über wenigstens einen Bremsstempel 11 direkt oder über eine Druckplatte auf einen zuspannseitigen Bremsbelag 3.

Dabei sind der Bremsstempel 11 und der Bremsdrehhebel 15 sowie der Bremsstempel 11 und die Druckplatte 4 gelenkig miteinander derart verbunden, dass der Bremsstempel 11 beim Zuspannen der Scheibenbremse ganz oder zumindest im wesentlichen einer Bewegung des zuspannseitigen Bremsbelages 3 in Umfangsrichtung der Bremsscheibe 1 folgen kann.

Die Zuspannvorrichtung ist dabei derart ausgelegt, dass auf den Bremsebelag 3 Zug- und Druckkräfte einwirken können, d.h. der Elektromotor kann zum Zuspannen und Lösen der Bremse genutzt werden.

Der betätigungsseitige Bremsbelag 3 ist in der Druckplatte 4 aufgenommen.

Die Druckplatte 4 ist parallel zur Bremsscheibenreibfläche verschieblich und steht über in ihr gelagerte Rollkörper, hier Kugeln 5 und 6, mit Rampen 7 und 8 von axial längenveränderlichen Druckstempeln bzw. Nachstellkolben 9 und 10 in Wirkverbindung, die in einem spitzen Winkel von mehr als 0 und weniger als 90° zur Bremsscheibenreibfläche ausgerichtet sind. Die Rampen könnten auch oder ergänzend auch in der Druckplatte 4 ausgebildet sein. Die Kugeln(oder sonstige Rollkörper) wären in diesem Fall in kallottenartigen Ausnehmungen der Druckstempel geführt, die dennoch Teil der Selbstverstärkungseinrichtung im Sinne des Anspruchs 1 wären.

An der Druckplatte 4 ist - wie bereits erwähnt - der Betätigungsstempel 11 zur Übertragung der in Richtung der Bremsscheibe wirkenden Druck -und Zugkräften angelenkt.

Diese Anlenkung erfolgt hier mittels eines Bolzens 33 und einem Gabelkopf 34.

Diese gelenkige Verbindung erlaubt bei einer Umfangsverschiebung der Druckplatte 4 eine Schwenkbewegung eines Betätigungsstempels 11 um den Kugelmittelpunkt 12 eines Kalottenlagers 13.

Das Kalottenlager 13 ist auf der Exzenterachse 14 des Bremsdrehhebels 15 zur Übertragung der Betätigungskräfte auf den Betätigungsstempel 11 aufgenommen.

Der Betätigungsstempel 11 ist mit einem Gewindestößel 16 verschraubt, wobei der Gewindestößel 16 wiederum fest mit einem Gelenklagergehäuse 17 verbunden ist.

Der Betätigungsstempel 11 bildet mit dem Gewindestößel 16 einen zum Zwecke der Verschleiß - Nachstellung längenveränderlichen Stößel bzw. Nachstellkolben.

In gleicher Weise sind die beiden Druckstempel 9 und 10 mit den Gewindespindeln 18 und 19, welche die Abstützkraft der Druckstempel 9/10 auf das Bremsengehäuse bzw. einen Bremssattel 20 übertragen, verschraubt.

Die Gewindespindeln 18/19 sind mit dem Gewindestößel 17 durch ein Synchronisationsgetriebe verbunden. Hierdurch wird erreicht, dass die Antriebs - Drehbewegung des Nachstellerantriebs nur synchron auf die beiden Druckstempel 9/10 und den Betätigungsstempel 11 einwirkt.

Der Bremsdrehhebel 15 ist in den zwei Lagerböcken 21/22 mittels zweier Wälzlager 23/24 reibungsarm gelagert.

Die Lagerböcke 21/22 sind mit dem Bremsengehäuse 20 fest verbunden.

Am Hebelarm des Bremsdrehhebels 15 ist eine Spindel 25 eines Kugelgewindetriebes 26 zur Übertragung von Zug- und Druck - Betätigungskräfte befestigt.

Der Kugelgewindetrieb 26 wird zur Betätigung der Bremse von dem Elektromotor 27 angetrieben.

Die Druckstempel 9/10 sind an ihrem der Bremsscheibe 1 zugewandten Ende in einer Führungsplatte 28 derart aufgenommen bzw. ausgestaltet, dass auf die Rampen 7/8 parallel zur Bremsscheibenreibfläche wirkende Abstützkräfte in die Führungsplatte 28 eingeleitet und von dieser, je nach Drehrichtung der Bremsscheibe, an den Führungsflächen 29 oder 30 auf den Bremsträger 31 abgeleitet werden.

Die Führung der Druckstempel 9/10 und des Betätigungsstempels 11 erfolgt an deren zu Bremsscheibe 1 gewandten Ende ausschließlich über die Führungsplatte 28 und den Bremsträger 31.

Der Bremssattel 32 und die Nachstelleinrichtung 35/36/37 sowie die Sattelschiebeführung 38/39 sind von den Umfangskräften entlastet.

Dabei sind die Bremsstempel 9, 10 vorzugsweise einfach direkt an der Führungsplatte 28 verschraubt.

Nachfolgend sei beispielhaft eine Bremsung mit dieser Scheibenbremse beschrieben:

Beim Erkennen eines Bremswunsches über die Betätigung des Bremspedals und damit des mit dem Bremspedal verbundenen Brems - Sollwertgebers wird der Elektromotor 27 durch das elektronische Bremssteuergerät zur Erzeugung einer Zustellbewegung des Kugelgewindetriebes 26 angesteuert.

Die Spindel 25 des Kugelgewindetriebes 26 bewegt den Hebelarm des Bremsdrehhebels 15 in Richtung der Bremsscheibe.

Der Bremsdrehhebel 15 wird dabei in seinen Lagern 23/24 verschwenkt und bewegt damit auch seine Exzenterwelle 14 und damit das Kalottenlager 13 entsprechend der Hebelübersetzung in Richtung der Bremsscheibe. Die Bewegung des Kalottenlagers wird über den Betätigungsstempel bzw. über die Bauteilkette 12 => 13 => 17 => 16 => 11 =>33 => 34 auf die Druckplatte 4 übertragen.

Die Druckplatte 4 wird dabei zunächst zur Überwindung des Lüftspieles mit dem Bremsbelag 3 rechtwinklig zu deren Reibfläche auf die Bremsscheibe 1 zu bewegt. Bei Anlegen des Bremsbelages 3 an die Reibfläche der Bremsscheibe 1 werden der Bremsbelag 3 und die damit verbundene Druckplatte 4 durch die entstehende Reibkraft von der Bremsscheibe 1 in deren Drehrichtung mitbewegt.

Die Kugeln 5/6 werden an den Rampen 7/8 entlang geführt und bewirken dabei auf die Druckplatte 4 zusätzlich zu deren Umfangsbewegung eine verstärkte Bewegung auf die Bremsscheibe zu. Die vom Betätigungsstempel 11 eingeleitete Anlegekraft wird dabei entsprechend der erhöhten Aufspreizung des Bremssattels 32 verstärkt. Infolge der Umfangsverschiebung der Druckplatte 4 führt der Betätigungsstempel 11 eine Schwenkbewegung um das Kalottenlager 13 und den Bolzen 33 aus. Der reaktionsseitige Bremsbelag 2 wird wie bei Schiebsattelbremsen üblich durch infolge einer Verschiebung des Bremssattels an die Bremsscheibe 3 gelegt. Hier muß keine Selbstverstärkungseinrichtung vorgesehen sein.

### Bezugszeichen

- Bremsscheibe: 1
- Bremsbeläge: 2, 3
- Druckplatte: 4
- Kugeln: 5 und 6
- Rampen: 7 und 8
- Druckstempel: 9 und 10
- Betätigungsstempel: 11
- Kugelmittelpunkt: 12
- Kalottenlager: 13
- Exzenterachse: 14
- Bremsdrehhebel: 15
- Gewindestößel: 16
- Gelenklagergehäuse: 17
- Gewindespindeln: 18 und 19
- Bremssattel: 20
- Lagerböcke: 21 /22
- Wälzlager: 23/24
- Spindel: 25
- Kugelgewindetrieb: 26
- Elektromotor: 27
- Führungsplatte: 28
- Führungsflächen: 29 oder 30
- Bremsträger: 31
- Bremssattel: 32
- Bolzen: 33
- Gabelkopf: 34
- Nachstelleinrichtung: 35/36/37
- Sattelschiebeführung: 38/39

## Patentansprüche

1. Scheibenbremse in selbstverstärkender Bauart, mit
a. einem achsfesten Bauteil (31), einem relativ zum achsfesten Bauteil verschieblichen Bremssattel (32, 20), wenigstens einem zuspannseitigen und einem reaktionsseitigen Bremsbelag (2, 3) und einer Bremsscheibe (1),
b. einer Zuspannvorrichtung zum Zuspannen des Bremsbelages, die eine Selbstverstärkungseinrichtung aufweist,
c. wenigstens einer Nachstellvorrichtung (18, 9; 19, 10) zum Nachstellen von Belag- und/oder Scheibenverschleiß,
d. wobei die Selbstverstärkungseinrichtung ein bei Bremsungen stationäres, bei Nachstellbewegungen aber parallel zur Bremsscheibendrehachse verschiebliches Bauteil (9, 10) aufweist, welches mit der Nachstellvorrichtung verbunden (18, 9; 19, 10) oder Teil derselben ist, **dadurch gekennzeichnet, dass**
e. das bei Bremsungen stationäre Bauteil (9, 10) der Selbstverstärkungseinrichtung derart mit geringem Spiel parallel zur Bremsscheibendrehachse zwischen Führungsflächen (29, 30) des achsfesten Bauteils (31) der Bremse aufgenommen ist, dass bei Bremsungen die auftretenden Umfangskräfte unmittelbar von dem stationären Bauteil der Selbstverstärkungseinrichtung auf das achsfeste Bauteil (31) der Bremse abgestützt werden, wobei
f. die Nachstellvorrichtung wenigstens einen oder mehrere Druckstempel (9/10) aufweist.

2. Scheibenbremse nach Anspruch 1, **dadurch gekennzeichnet, dass** das achsfeste Bauteil ein Bremsträger (31) mit Führungsflächen (29, 30) ist, an dem der Bremssattel verschieblich geführt ist.

3. Scheibenbremse nach Anspruch 1 oder 2, **dadurch gekennzeichnet, dass** die Druckstempel (9/10) an ihrem der Bremsscheibe (1) zugewandten Ende in einer Führungsplatte (28) aufgenommen sind, welche das bei Bremsungen stationäre Bauteil der Selbstverstärkungseinrichtung ausbildet.

4. Scheibenbremse nach Anspruch 3, **dadurch gekennzeichnet, dass** die Druckstempel (9/10) jeweils Teil einer axial längenveränderlichen Mutter-/Spindeleinheit sind.

5. Scheibenbremse nach einem der Ansprüche 3 oder 4, **dadurch gekennzeichnet, dass** die Führungsplatte (28) zwei Führungsflächen aufweist, an welchen auf Rampen (7/8) parallel zur Bremsscheibenreibfläche wirkende Abstützkräfte und in die Führungsplatte (28) eingeleitete Kräfte je nach Drehrichtung der Bremsscheibe an die Führungsflächen (29 oder 30) des Bremsträges (31) abgeleitet werden.

6. Scheibenbremse nach einem der Ansprüche 3 bis 5, **dadurch gekennzeichnet, dass** die Führung der Druckstempel (9/10) in ihrem der Bremsscheibe zugewandten Bereich ausschließlich über die Führungsplatte (28) und den Bremsträger (31) erfolgt.

7. Scheibenbremse nach einem der Ansprüche 3 bis 6, **dadurch gekennzeichnet, dass** die Bremsstempel (9, 10) an der Führungsplatte verschraubt sind.

8. Scheibenbremse nach einem der vorstehenden Ansprüche, **dadurch gekennzeichnet, dass** die Bremsstempel aus Spindel und Mutter bestehen und dass die Bremsstempel an ihrer von der Führungsfläche abgewandten Seite am Bremssattelinneren abgestützt sind.

## Claims

1. Disc brake of a self-energising design, comprising
a. an axially fixed component (31), a brake calliper (32, 30) which is movable relative to the axially fixed component, at least one application-side and one reaction-side brake pad (2, 3), and a brake disc (1),
b. an application device for applying the brake pad, which application device has a self-energising device,
c. at least one adjusting device (18, 9; 19, 10) for adjusting for pad and/or disc wear,
d. wherein the self-energising device has a component (9, 10) which is stationary during braking processes but which is movable parallel to the brake disc rotational axis during adjusting movements, which component is connected to or is part of the adjusting device (18, 9; 19, 10), **characterised in that**
e. the component (9, 10) of the self-energising device which is stationary during braking processes is held, with a small degree of play, parallel to the brake disc rotational axis between guide surfaces (29, 30) of the axially fixed component (31) of the brake in such a way that, during braking processes, the circumferential forces which occur are transmitted, so as to be supported, directly from the stationary component of the self-energising device to the axially fixed component (31) of the brake, wherein
f. the adjusting device comprises one or more pressure rams (9/10).

2. Disc brake according to claim 1, **characterised in that** the axially fixed component is an adapter (31) with guide surfaces (29, 30) on which the brake calliper is movably guided.

3. Disc brake according to claim 1 or 2, **characterised in that** the pressure rams (9/10) are, at their ends facing toward the brake disc (1), held in a guide plate (28) which forms the component of the self-energising device which is stationary during braking processes.

4. Disc brake according to claim 3, **characterised in that** the pressure rams (9/10) are in each case part of a nut/spindle unit which is axially variable in length.

5. Disc brake according to claim 3 or 4, **characterised in that** the guide plate (28) has two guide surfaces at which, on ramps (7/8), support forces which act parallel to the brake disc friction surface and forces which are introduced into the guide plate (28) are dissipated, depending on the rotational direction of the brake disk, to the guide surfaces (29 or 30) of the adapter (31).

6. Disc brake according to any of claims 3 to 5, **characterised in that** guidance of the pressure rams (9/10) takes place, **in that** region thereof which faces toward the brake disc, exclusively by means of the guide plate (28) and the adapter (31).

7. Disc brake according to any of claims 3 to 6, **characterised in that** the brake rams (9, 10) are bolted to the guide plate.

8. Disc brake according to any of the preceding claims, **characterised in that** brake rams are composed of spindles and nuts and **in that** the brake rams are supported, on their side facing away from the guide surface, on the inside of the brake calliper.

## Revendications

1. Frein à disque en conception à renfort automatique, comprenant
a) un composant (31) solidaire avec l'essieu, un étrier de frein (32, 20) déplaçable relativement audit composant solidaire avec l'essieu, au moins une garniture de frein (2, 3) respective du côté de serrage de frein et du côté de réaction et un disque de frein (1),
b) un dispositif de serrage de frein à serrer ladite garniture de frein, qui comprend un dispositif de renfort automatique,
c) au moins un dispositif de rattrapage (18, 9 ; 19, 10) à rattraper l'usure sur ladite garniture et/ou sur le disque,
d) dans lequel ledit dispositif de renfort automatique comprend un composant (9, 10), qui est stationnaire au cours des opérations de serrage de frein mais est déplaçable en parallèle à l'axe de révolution dudit disque de frein au cours des mouvements de rattrapage, et qui est relié audit dispositif de rattrapage (18, 9 ; 19, 10) ou constitue une partie du dernier,
**caractérisé en ce**
e) **que** ledit composant (9, 10) stationnaire au cours des opérations de serrage de frein dudit dispositif de renfort automatique est reçu entre des aires de guidage (29, 30), en parallèle à l'axe de révolution dudit disque de frein, dudit composant (31) solidaire avec l'essieu du frein, à un jeu si minime qu'au cas des opérations de serrage de frein, les efforts périphériques y apparaissant soient appuyés directement à partir dudit composant stationnaire dudit dispositif de renfort automatique audit composant (31) solidaire avec l'essieu du frein,
f) audit dispositif de rattrapage comprenant au moins un ou plusieurs pistons-chasse (9/10).

2. Frein à disque selon la revendication 1, **caractérisé en ce que** ledit composant solidaire avec l'essieu est un support de frein (31) aux aires de guidage (29, 30), auquel ledit étrier de frein est guidé de façon déplaçable.

3. Frein à disque selon la revendication 1 ou 2, **caractérisé en ce que** lesdits pistons-chasse (9/10) sont reçu, par leur extrémité en face dudit disque de frein (1), dans une plaque de guidage (28), qui constitue ledit composant stationnaire dudit dispositif de renfort automatique au cours des opérations de serrage de frein.

4. Frein à disque selon la revendication 3, **caractérisé en ce que** chacun desdits pistons-chasse (9/10) constitue une partie respective d'une unité à écrou/broche variable en longueur en sens axial.

5. Frein à disque selon une quelconque des revendications 3 ou 4, **caractérisé en ce que** ladite plaque de guidage (28) comprend deux aires de guidage, auxquelles des efforts d'appui agissant en parallèle à l'aire de friction dudit disque de frein et des efforts introduits dans ladite plaque de guidage (28) sont dérivés sur des rampes (7/8), selon le sens de révolution dudit disque de frein, auxdites aires de guidage (29 ou 30) dudit support de frein (31).

6. Frein à disque selon une quelconque des revendications 3 à 5, **caractérisé en ce que** le guidage desdits pistons-chasse (9/10) se fait dans leur zone en face dudit disque de frein exclusivement via ledit disque de guidage (28) et ledit support de frein (31).

7. Frein à disque selon une quelconque des revendications précédentes 3 à 6, **caractérisé en ce que** lesdits pistons-chasse (9, 10) sont vissés à ladite plaque de guidage.

8. Frein à disque selon une quelconque des revendications précédentes, **caractérisé en ce que** lesdits pistons de freinage sont composés d'une broche et d'un écrou, et **en ce que** lesdits pistons de freinage s'appuient à l'intérieur dudit étrier de frein de leur côté opposé à ladite plaque de guidage.
